# EUROPEAN PATENT APPLICATION

(11) **EP 2 730 461 A2**
(43) Date of publication of application: **14.05.2014**
(21) Application number: 13190193.6
(22) Date of filing: 25.10.2013
(51) Int. Cl.: B60Q 1/115

(54) **Control apparatus for vehicle lamp**

(30) Priority: 08.11.2012 JP 2012246485
(71) Applicant: Koito Manufacturing Co., Ltd., Tokyo 108-8711 (JP)
(72) Inventor: Kasaba, Yusuke, Shizuoka-shi, Shizuoka (JP); Yamazaki, Masashi, Shizuoka-shi, Shizuoka (JP); Goto, Kazuo, Shizuoka-shi, Shizuoka (JP); Toda, Atsushi, Shizuoka-shi, Shizuoka (JP); Tomono, Toshikazu, Shizuoka-shi, Shizuoka (JP)
(74) Representative: Grünecker, Kinkeldey, Stockmair & Schwanhäusser

(57) **Abstract**

In a control apparatus (100), a controller (120) adjusts an optical axis (O) with respect to a change of a detected total angle (θ) during vehicle stop and avoids adjusting the optical axis (O) with respect to a change of the total angle (θ) during vehicle travel. The controller (120) holds in a volatile manner a road surface angle (θᵣ) reference value and a vehicle attitude angle (θᵥ) reference value. If a switch (236) is turned off, the controller (120) stores the two reference values in a storage in a non-volatile manner. If a vehicle (300) does not start moving within a predetermined period after the switch (235) is turned on, the controller (120) obtains a vehicle attitude angle (θᵥ) and updates the vehicle attitude angle reference value. If the vehicle (300) starts moving within the period, the controller (120) obtains a road surface angle (θᵣ) and adjusts the optical axis (O) using the vehicle attitude angle (θᵥ) or the stored vehicle attitude angle reference value.

## Description

### BACKGROUND

### 1. Field

The invention relates to a control apparatus for a vehicle lamp and more particularly to a control apparatus for a vehicle lamp for use in an automobile or the like.

### 2. Related Art

There has been known auto-leveling control which automatically adjusts an optical axis position of a vehicle headlamp in accordance with an inclination angle of a vehicle to change an illumination direction of the vehicle headlamp. Generally, the auto-leveling control adjusts the optical axis position of the headlamp based on a pitch angle of the vehicle which is derived from an output value of a vehicle height sensor. In contrast, JP 2012-030782 A (corresponding to EP 2 402 212 A2) and JP 2012-030783 A (corresponding to EP 2 399 774 A2) describe control apparatuses for vehicle lamps that perform the auto-leveling control using an inclination sensor such as an acceleration sensor or the like.

### SUMMARY

Where an inclination sensor such as an acceleration sensor, a gyro sensor (an angular velocity sensor, an angular acceleration sensor), or a geomagnetic sensor is used, an auto-leveling system can be offered at lower cost than in the case where the vehicle height sensor is used. Also, a reduction in weight thereof can be achieved. As a result, cost and weight of the vehicle can be achieved. On the other hand, even in the case where the acceleration sensor or the like is used as the inclination sensor, there is a demand for further enhancing the accuracy of the auto-leveling control.

As a result of an intensive study to achieve high accuracy of the auto-leveling control, the inventors has recognized that there is room in a control device for a vehicle lamp according to related art for achieving higher performance of the auto-leveling control.

The invention has been made in view of these circumstances. The invention provides a technique for enhancing the accuracy of the auto-leveling control for a vehicle lamp.
(1) A control apparatus for a vehicle lamp includes a receiver, a controller, and a storage. The receiver receives an output value of an inclination sensor that can derive a total angle which is an inclination angle of a vehicle with respect to a horizontal plane. The inclination angle of the vehicle includes a road surface angle which is an inclination angle of a road surface with respect to the horizontal plane and a vehicle attitude angle which is an inclination angle of the vehicle with respect to the road surface. The controller controls an optical axis of the vehicle lamp. The storage stores in a non-volatile manner a road surface angle reference value and a vehicle attitude angle reference value. The controller holds in a volatile manner the road surface angle reference value and the vehicle attitude angle reference value. With respect to a change of the total angle during vehicle stop, the controller generates an optical axis adjustment signal using the vehicle attitude angle, which is obtained based on the total angle and the held road surface angle reference value, and holds the obtained vehicle attitude angle as a new vehicle attitude angle reference value. With respect to a change of the total angle during vehicle travel, the controller avoids outputting the optical axis adjustment signal or outputs an optical axis maintaining signal, and holds the road surface angle, which is obtained based on the total angle and the held vehicle attitude angle reference value, as a new road surface angle reference value. If a switch of a power source for the control apparatus shifts to an off state, the controller writes into the storage the road surface angle reference value and the vehicle attitude reference value, which are held. Where the switch shifts to an on state, if it is not detected within a predetermined time after the shift that the vehicle starts moving, the controller generates the optical axis adjustment signal using the vehicle attitude angle, which is obtained based on the total angle and the road surface angle reference value read out from the storage, and holds the obtained vehicle attitude angle as the vehicle attitude angle reference value; and if it is detected within the predetermined time after the shift that the vehicle starts moving, the controller holds the road surface angle, which is obtained based on the total angle and the vehicle attitude angle reference value read out from the storage, as the road surface angle reference value, and generates the optical axis adjustment signal using the vehicle attitude angle, which is obtained based on the read-out road surface angle reference value and the total angle, or the read out vehicle attitude angle reference value.
(2) In the control apparatus of (1), if it is detected within the predetermined time after the shift that the vehicle starts moving, the controller may maintain the optical axis at a time when the vehicle starts moving from when the vehicle starts moving to when the vehicle stops or adjust a position of the optical axis to a predetermined reference position.
(3) The control apparatus of any one of (1) and (2) may further include a power supply maintaining section that maintains supply of electric power from the power source in a state where the switch is in the off state.
(4) In the control apparatus of (3), upon completion of writing into the storage the road surface angle reference value and the vehicle attitude angle reference value, which are held, the controller may generate a stop instruction signal to instruct to stop the supply of the electric power from the power source. Upon receipt of the stop instruction signal, the power supply maintaining section may stop the supply of the electric power from the power source.

It should be noted that an appropriate combination of respective elements described above may also be included in the scope of the invention for which protection is sought by this application

According to the invention, it is possible to provide a technique for enhancing the accuracy of the auto-leveling control for a vehicle lamp.

### BRIEF DESCRIPTION OF THE DRAWINGS

Fig. 1 is a schematic vertical section view showing a headlamp unit including a vehicle lamp that is a control target of a control ECU according to a first embodiment;
Fig. 2 is a functional block diagram illustrating an operational interaction between the headlamp unit and the control ECU;
Fig. 3 is a schematic diagram illustrating an acceleration vector occurring in a vehicle and an inclination angle of a vehicle that can detected by an inclination sensor;
Fig. 4A is a time chart illustrating a change of supplied electric power, with time, in a control ECU of a comparative example;
Fig. 4B is a time chart illustrating a change of supplied electric power, with time, in the control ECU according to the first embodiment;
Fig. 5A is a view illustrating an auto-leveling control in a case where it is not detected within a predetermined time after ignition is turned on that the vehicle starts moving;
Fig. 5B is a view illustrating the auto-leveling control in a case where it is detected within a the predetermined time after the ignition is turned on that the vehicle starts moving;
Fig. 6 is a flow chart illustrating the auto-leveling control executed by the control ECU according to the first embodiment; and
Fig. 7 is a flow chart illustrating the auto-leveling control executed by the control ECU according to the first embodiment.

### DETAILED DESCRIPTION

Hereinafter, embodiments of the invention will be described with reference to the accompanying drawings. The same or equivalent elements, members, and processes shown in the drawings are denoted by identical reference numerals, and redundant description thereon will be omitted appropriately. In addition, embodiments and modifications are not intended to limit the invention, but to present examples. All features and combinations thereof which are described in the embodiments and the modifications are not always essential to the invention.

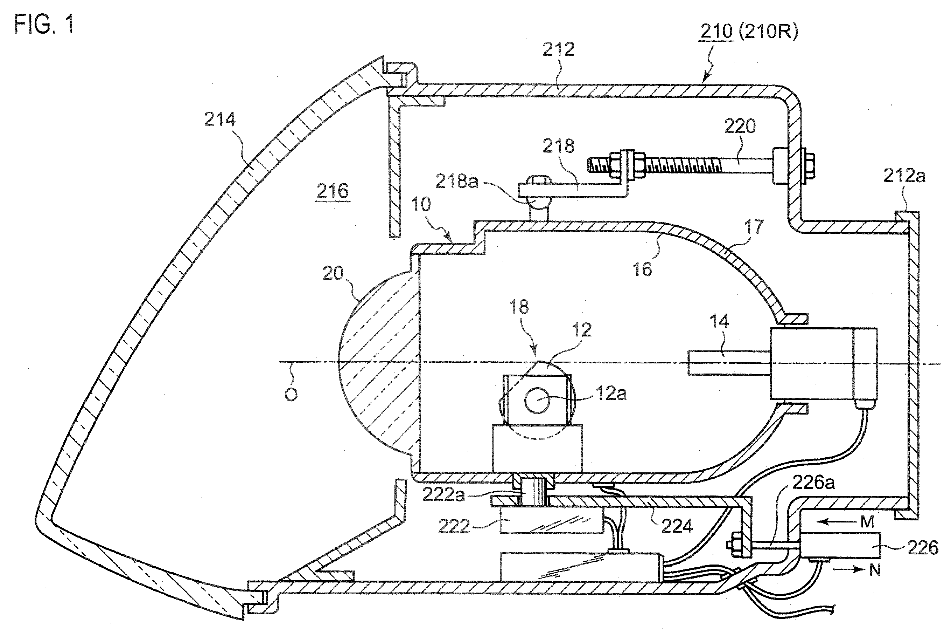

Fig. 1 is a schematic vertical section view of a headlamp unit which is a control target of a control ECU according to the first embodiment. A vehicle headlamp unit 210 has a structure in which a pair of headlamp units which are formed symmetrically are disposed on right and left sides of a vehicle in a vehicle width direction. Since the headlamp units 210R and 210L disposed on the right and the left sides have substantially the same configuration, the structure of the headlamp unit 210R on the right side will be described below. The headlamp unit 210R includes a lamp body 212 having an opening portion on a front side of the vehicle and a transparent cover 214 that covers the opening portion. The lamp body 212 has a detachable cover 212a on a rear side of the vehicle. A lamp chamber 216 is formed of the lamp body 212 and the transparent cover 214. A lamp unit 10 serving as a vehicle lamp is accommodated in the lamp chamber 216.

In the lamp unit 10, a lamp bracket 218 is formed. The lamp bracket 218 includes a pivot mechanism 218a serving as a swing center, in up, down, right, and left directions, of the lamp unit 10. The lamp bracket 218 screws with an aiming adjustment screw 220 which is supported by the lamp body 212. A rotational shaft 222a of a swivel actuator 222 is fixed to a lower surface of the lamp unit 10. The swivel actuator 222 is fixed to a unit bracket 224. A leveling actuator 226 is connected to the unit bracket 224. The leveling actuator 226 includes, for example, a motor that extends and retracts a rod 226a in an arrow M direction and an arrow N direction. When the rod 226a is extended and retracted in the arrows M and N directions, the lamp unit 10 takes a rearward tilted attitude and a forward tilted attitude. Thereby, it is possible to perform a leveling adjustment to direct a pitch angle of an optical axis O upward or downward.

The lamp unit 10 includes a shade mechanism 18 having a rotational shade 12, a light source 14, a lamp housing 17 that supports a reflector 16 on an inner wall thereof, and a projection lens 20. Examples of the light source 14 include an incandescent lamp, a halogen lamp, a discharge lamp, and an LED. At least a part of the reflector 16 has an elliptically spherical shape. The reflector 16 reflects light emitted from the light source 14. A part of (i) the light from the light source 14 and (ii) the light reflected by the reflector 16 is guided to the projection lens 20 via the rotational shade 12. The rotational shade 12 is a cylindrical member that is rotatable about a rotational shaft 12a. The rotational shade 12 has a notched portion and a plurality of shade plates (not shown). The notched portion or anyone of the shade plates is moved onto the optical axis O, to thereby form a predetermined light distribution pattern. The projection lens 20 is formed of a plano-convex aspheric lens. The projection lens 20 inverts and projects a light source image formed on a rear focal plane thereof onto a virtual vertical screen ahead of the vehicle lamp.

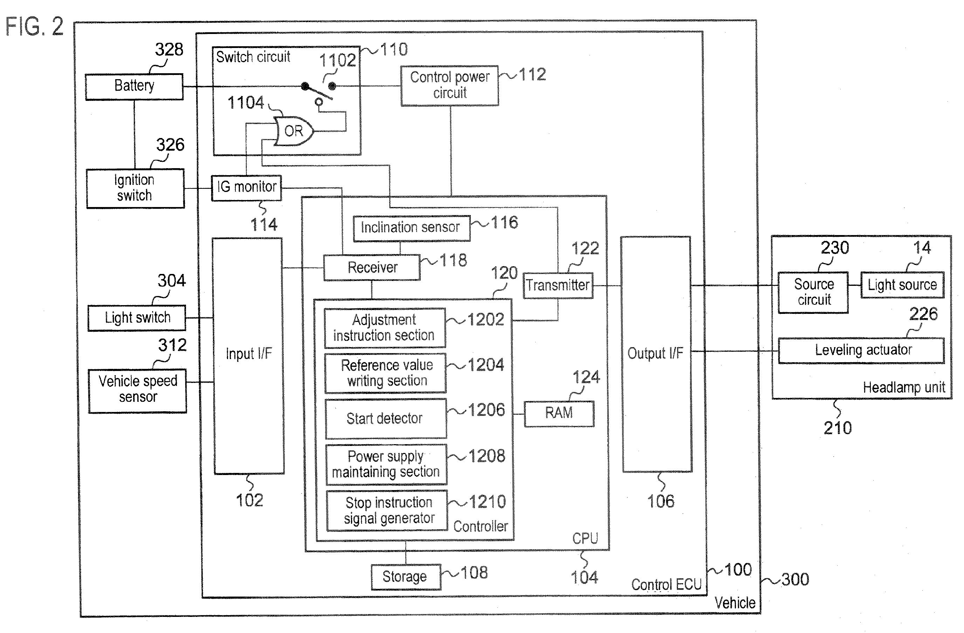

Fig. 2 is a functional block diagram illustrating an operational interaction between the headlamp unit and the control ECU. It is noted that in Fig. 2, both the headlamp unit 210R and the headlamp unit 210L are collectively referred to as a "headlamp unit 210." Further, the control ECU 100 is implemented by the hardware configuration including various elements and circuits such as a CPU and a memory of a computer system and by the software configuration including a computer program. Fig. 2 shows functional blocks that are realized in cooperation with the hardware and software configurations. One skilled in the art appreciates that these functional blocks may be realized in various forms by means of a combination of hardware and software.

The control ECU 100 serving as a control device for a vehicle lamp includes an input interface 102, a CPU 104, an output interface 106, a storage 108, a switch circuit 110, a control power circuit 112, and an IG monitor 114. The control ECU 100 is provided, for example, near the dashboard of the vehicle 300. It is noted that the installation position of the control ECU100 is not particularly limited. The control ECU 100 may be provided, for example, in the headlamp unit 210.

A light switch 304, a vehicle speed sensor 312, and the like are connected to the input interface 102. Signals output from the light sensor 304 and the vehicle speed sensor 312 are input to the control ECU 100 via the input interface 102. The input signals are transmitted to the CPU 104 from the input interface 102.

The CPU 104 includes an inclination sensor 116, a receiver 118, a controller 120, a transmitter 122, and a RAM 124. The inclination sensor 116 includes an acceleration sensor. In this embodiment, the inclination sensor 116 is provided in the CPU 104. However, the inclination sensor 116 may be provided outside CPU 104 or outside the control ECU 100.

The receiver 118 receives various signals which are input to the control ECU 100 via the input interface 102. Further, the receiver 118 receives signals output from the IG monitor and the inclination sensor 116. The signals received by the receiver 118 are transmitted to the controller 120. The controller 120 controls an optical axis O of the lamp unit 10 based on the output value of the inclination sensor 116. The controller 120 has an adjustment instruction section 1202, a reference value writing section 1204, a start detector 1206, a power supply maintaining section 1208, and a stop instruction signal generator 1210. The controller 120 generates pitch angle information of the vehicle 300 based on an output value of the inclination sensor 116, and information stored in the storage 108 or in the RAM 124 as required. Then, the controller 120 generates an optical axis adjustment signal to instruct to adjust the optical axis O, based on the thus obtained pitch angle information. Further, the controller 120 generates a control signal to instruct to turn on/off the lamp unit 10, a control signal to instruct to switch the switch circuit 110, and the like. Operations of each elements of the controller 120 will be described in detail later.

The RAM 124 is a volatile memory that temporarily stores information used for control executed by the controller 20. The RAM 124 temporarily stores information sent from the controller 120 and information read out from the storage 108. The controller 120 holds, in a volatile manner, a road angle reference value and a vehicle attitude angle reference value by means of the RAM 124 (which will be described later). The storage 108 is a non-volatile memory that stores, in a non-volatile manner, a variety of information including the road angle reference value and the vehicle attitude angle reference value.

Upon receiving various signals from the controller 120, the transmitter 122 transmits these signals to the output interface 106. Also, the transmitter 122 transmits to the switch circuit 110 a control signal to instruct to switch the switch circuit 110. A source circuit 230 of the headlamp unit 210 and a leveling actuator 226 are connected to the output interface 106.

The optical axis adjustment signal and the turning on/off instruction signal, which are generated by the controller 120, are output via the output interface 106 to the source circuit 230 of the headlamp unit 210 and the leveling actuator 226. Upon receipt of the optical axis adjustment signal, the leveling actuator 226 operates to thereby adjust the optical axis O of the lamp unit 10 with respect to a pitch angle direction. Also, the source circuit 230 turns on/off the light source 14 based on the received turning on/off instruction signal.

A battery 328 and an ignition switch 326 are provided in the vehicle 300. By turning on/off the ignition switch 326, switching is made between supply and non-supply of power to the control ECU 100 from the battery 328. That is, the ignition switch 326 functions as a switch for an electric source of the control ECU 100. The switch circuit 110 connects the battery 328 and the control power circuit 112. The switch circuit 110 includes a switch 1102 and an OR circuit 1104. When receiving a switching instruction signal set to a high level (hereinafter, referred to as a "high-level signal") from the OR circuit 1104, the switch 1102 is turned on. Also, when receiving a switching instruction signal set to a low level (hereinafter, referred to as a "low-level signal") from the OR circuit 1104, the switch 1102 is turned off. A signal is input from the IG monitor 114 or the CPU 104 to the OR circuit 1104.

The IG monitor 114 monitors which of an on state and an off state the ignition switch 326 is in. If the ignition switch 326 is in the on state, the IG monitor 114 transmits the high-level signal to the receiver 118 and the OR circuit 1104. Also, if the ignition switch 326 is in the off state, the IG monitor 114 transmits the low-level signal to the receiver 118 and the OR circuit 1104. For example, by receiving a signal indicating the on state or a signal indicating the off state from the ignition switch 326, the IG monitor 114 can monitor which of the on state and the off state the ignition switch 326 is in. Alternatively, by monitoring an ignition voltage, the IG monitor 114 can monitor which of the on state and the off state the ignition switch 326 is in. In this case, for example, if the ignition voltage falls below a predetermined threshold or if the ignition voltage becomes 0V, the IG monitor 114 determines that the ignition switch 326 is turned off.

If the high-level signal is transmitted from the IG monitor 114 to the switch 1102 via the OR circuit 1104 in a state where the ignition switch 326 is in the on state, the switch 1102 is turned on and the battery 328 and the control power circuit 112 are connected to each other. Thus, power is supplied to the control power circuit 112 from the battery 328. Or, the high-level signal is transmitted to the switch 1102 via the OR circuit 1104 from the controller 120 by a control (which will be described later), the switch 1102 is turned on as well and power is supplied to the control power circuit 112 from the battery 328. The control power circuit 112 supplies to the CPU 104 the power supplied from the battery 328. If the low-level signal is transmitted to the switch 1102 from the IG monitor 114 and the controller 120, the switch 1102 is turned off to release the connection between the control power circuit 112 and the battery 328. As a result, supplying power from the battery 328 to the CPU 104 is stopped.

In accordance with driver's manipulation of the light switch 304, the control ECU 100 determines a light distribution pattern to be formed by the headlamp unit 210. The control ECU 100 may execute an automatic control to form a light distribution pattern which is optimal for a vehicle state detected by various sensors, regardless of the manipulation of the light switch 304. For example, the automatic control to form the light distribution pattern is executed when the light switch 304 instructs the automatic control to form the light distribution pattern.

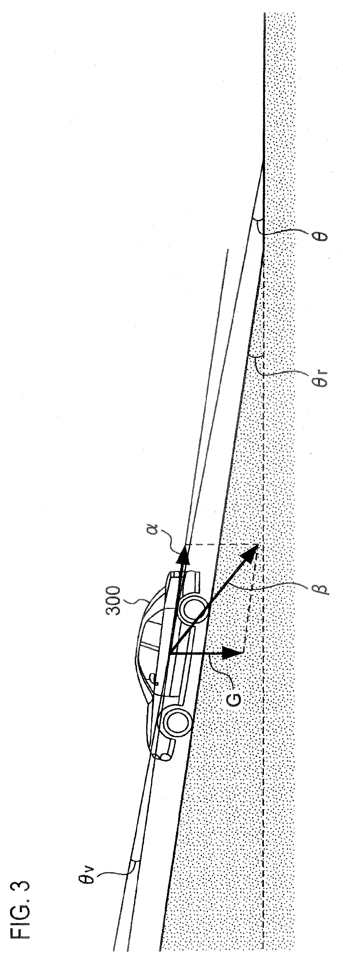

Subsequently, the auto-leveling control executed by the control ECU 100 having the configuration described above will be described in detail. Fig. 3 is a schematic diagram for explaining an acceleration vector occurring in the vehicle and the inclination angle of the vehicle which can be detected by the inclination sensor.

For example, if a luggage is loaded in a luggage room in a rear part of the vehicle or if a passenger is seated in a rear seat of the vehicle, the vehicle attitude becomes the rearward tilted attitude. If the luggage is unloaded or if the passenger in the rear seat gets out of the vehicle, the vehicle attitude is tilted forward from its rearward tilted attitude. If the vehicle becomes the rearward tilted attitude or the forward tilted attitude, an illumination direction of the lamp unit 10 changes vertically, and a forward illumination distance is increased or decreased correspondingly. Therefore, the control ECU 100 derives the inclination angle, in the pitch direction, of the vehicle or a change of the inclination angle from the output values of the inclination sensor 116 and sets the pitch angle (hereinafter, which will be referred to as an "optical axis angle θ_{O}") of the optical axis O to an angle corresponding to the vehicle attitude. By executing the auto-leveling adjustment that performs leveling adjustment of the lamp unit 10 based on the vehicle attitude in real time, it is possible to optimally adjust a distance which forward illumination light reaches, even if the vehicle attitude is changed.

The inclination sensor 116 is, for example, a tri-axial acceleration sensor having an X axis, a Y axis, and a Z axis which are mutually orthogonal to each other. The inclination sensor 116 which is in an arbitrary state is attached to the vehicle 300. The inclination sensor 116 detects an acceleration vector occurring in the vehicle 300. In the traveling vehicle 300, a motion acceleration resulting from the gravity acceleration and movement of the vehicle 300 is generated. Therefore, the inclination sensor 116 can detect a resultant acceleration vector in which a gravity acceleration vector G and a motion acceleration vector α as shown in Fig. 3 are synthesized. Further, during stop of the vehicle 300, the inclination sensor 116 can detect the gravity acceleration vector G The inclination sensor 116 outputs numerical values of respective axis components of the detected acceleration vector. The numerical values of X, Y, Z components, which are output from the inclination sensor 116, are converted by the CPU 104 into components of a longitudinal axis, a lateral axis, and a vertical axis of the vehicle 300. Thus, accelerations in the vehicle longitudinal direction, vehicle lateral direction, and vehicle vertical direction can be derived from the output values of the inclination sensor 116.

An inclination of the vehicle 300 with respect to the gravity acceleration vector G can be derived from the detection values of the inclination sensor 116 during the vehicle stop. That is, from the output values of the inclination sensor 116, it is possible to derive a total angle θ which is a inclination angle of the vehicle with respect to a horizontal plane and which includes (i) a road surface angle θᵣ that is an inclination angle of a road surface with respect to the horizontal plane and (ii) a vehicle attitude angle θᵥ that is an inclination angle of the vehicle with respect to the road surface. It is noted that the road surface angle θᵣ, the vehicle attitude angle θᵥ, and the total angle θ denote angles in the pitch direction of the vehicle 300.

An object of the auto-leveling control is to keep the distance, which the forward illumination light reaches, be optimum by absorbing a change in the forward illumination distance of the vehicle lamp which is caused by a change in the inclination angle of the vehicle in the pitch direction. Accordingly, the inclination angle of the vehicle that is required in the auto-leveling control is the vehicle attitude angle θᵥ. That is, it is desired in the auto-leveling control that the position of the optical axis of the lamp unit 210 is adjusted when the vehicle attitude angle θᵥ changes and that the position of the optical axis of the lamp unit 210 is maintained when the road surface angle θᵣ changes.

Then, the control ECU 100 according to this embodiment estimates a change of the total angle θ during the vehicle stop as a change of the vehicle attitude angle θᵥ. Also, the control ECU 100 estimates a change of the total angle θ during vehicle travel as a change of the road surface angle θᵣ. The vehicle attitude angle θᵥ is rarely changed during the vehicle travel by increase/decrease of an amount of luggage or the number of persons on the vehicle. Therefore, the change of the total angle θ during the vehicle travel can be estimated as the change of the road surface angle θᵣ. Meanwhile, the road surface angle θᵣ is rarely changed during the vehicle stop by a movement of the vehicle 300. Therefore, the change of the total angle θ during the vehicle stop can be estimated as the change of the vehicle attitude angle θᵥ.

The adjustment instruction section 1202 of the control ECU 100 executes the optical axis adjustment with respect to the change of the total angle θ during the vehicle stop and avoids executing the optical axis adjustment with respect to the change of the total angle θ during vehicle travel. The adjustment instruction section 1202 avoids the optical axis adjustment by avoiding outputting the optical axis adjustment signal or by outputting an optical axis maintaining signal to instruct to maintain the position of the optical axis. The outputting of the optical axis adjustment signal may be avoided by not generating the optical axis adjustment signal. Alternatively, the optical axis adjustment signal may be generated and thereafter the outputting of the generated optical axis adjustment may be avoided.

Specifically, at first, in a manufacturing plant of a vehicle manufacturer or the like, the vehicle 300 is placed on a horizontal plane and is set to be in a reference state. Then, an initialization signal is transmitted to the control ECU 100 by a switch operation of an initialization processing apparatus, by means of communication of CAN (Controller Area Network) system or the like. Upon receipt of the initialization signal, the controller 120 starts an initial aiming adjustment and sets the optical axis O of the lamp unit 10 to an initial setting position. Also, the controller 120 stores an output value of the inclination sensor 116, which is obtained when the vehicle 300 is in the reference state, in the RAM 124 as a reference value (θᵣ = 0 degree) of the road surface angle θᵣ and a reference value (θᵥ = 0 degree) of the vehicle attitude angle. Further, the controller 120 stores these reference values in the storage 108 if necessary.

### (Control during the ON state of the ignition switch (normal state))

In a situation where the vehicle 300 is actually used, the adjustment instruction section 1202 of the controller 120 avoids executing the optical axis adjustment with respect to the change of the total angle θ during the vehicle travel. It is determined, for example, based on a vehicle speed obtained from the vehicle speed sensor 312 as to whether or not the vehicle is traveling (during the vehicle travel). In a vehicle stopping moment, the adjustment instruction section 1202 obtains the road surface angle θᵣ by subtracting the vehicle attitude angle reference value stored in the RAM 124 from the current total angle θ. Then, the thus obtained road surface angle θᵣ is stored in the RAM 124 as a new road surface angle reference value. Thereby, the change of the total angle θ during the vehicle traveling which is estimated as the change of the road surface angle θᵣ is incorporated in the road surface angle reference value. It is noted that at the vehicle stopping moment, the adjustment instruction section 1202 may calculate a difference between the total angles θ before and after the vehicle travels and may incorporate this difference into the road surface angle reference value to calculate a new road surface angle reference value.

During the vehicle stop, the adjustment instruction section 1202 calculates the vehicle attitude angle θᵥ repeatedly at a predetermined timing. The adjustment instruction section 1202 obtains the vehicle attitude angle θᵥ by subtracting the road surface angle reference value stored in the RAM 124 from the current total angle θ. Then, the thus obtained vehicle attitude angle θᵥ is stored in the RAM 124 as a new vehicle attitude angle reference value. Thereby, the change of the total angle θ during the vehicle stop, which is estimated as the change of the vehicle attitude angle θᵥ, is incorporated in the vehicle attitude angle reference value. It is noted that the adjustment instruction section 1202 may calculate, for example, a difference between the current total angle θ and the previous total angle θ and calculate a new vehicle attitude angle reference value by incorporating this difference into the vehicle attitude angle reference value.

Then, the adjustment instruction section 1202 generates the optical axis adjustment signal using the obtained vehicle attitude angle θᵥ (containing the updated vehicle attitude angle reference value). For example, the adjustment instruction section 1202 determines the optical axis angle θ_{O} by using a conversion table in which the vehicle attitude angle θᵥ and the optical axis angle θ_{O} are associated with each other. The conversion table is stored in the storage 108 in advance. The generated optical axis adjustment signal is transmitted from the transmitter 122 to the leveling actuator 226. Then, the optical axis O is adjusted to the determined optical axis angle θ_{O} by driving of the leveling actuator 226.

The term "during the vehicle travel" means a period, for example, between a time at which the detection value of the vehicle speed sensor 312 exceeds 0 and a time at which the detection value of the vehicle speed sensor 312 becomes 0. The term "vehicle stopping moment" means, for example, a time at which the detection value of the inclination sensor 116 is stable after the detection value of the vehicle speed sensor 312 becomes 0. The phrase "the time at which the detection value of the inclination sensor 116 is stable" may be a time at which a change amount of the detection value of the inclination sensor 116 per unit time becomes smaller than a predetermined value or may be a time at which a predetermined time (for example, after 1∼2 seconds) elapses after the detection value of the vehicle speed sensor 312 becomes 0. The term "during the vehicle stop" means a period, for example, from the time at which the output value of the inclination sensor 116 becomes stable (the vehicle stopping moment) to the time at which the detection value of the vehicle speed sensor 312 exceeds 0. "During vehicle travel," the "vehicle stopping moment," the "predetermined amount," the "predetermined time," and "during the vehicle stop" may be appropriately set based on designer's experiments and/or designer's simulations.

### (Control when the ignition switch shifts to the off state)

The controller 120 is driven by the power supplied from the battery 328. Therefore, if the ignition switch 326 is turned off and the supply of electric power from the battery 328 is stopped, the road surface angle reference value and the vehicle attitude angle reference value, which are stored in the RAM124, disappear. Then, if the ignition switch 326 shifts to the off state, the controller 120 writes the road angle reference value and the vehicle attitude angle reference value, which are held in the RAM124, into the storage 108 which is the non-volatile memory.

More specifically, if the ignition switch 326 shifts to the off state, the IG monitor 114 transmits the low-level signal to the controller 120. Upon receipt of the low-level signal, the reference value writing section 1204 of the controller 120 writes the road surface angle reference value and the vehicle attitude angle reference value, which are held in the RAM 124, into the storage 108. Thereby, even if the ignition switch 326 is turned off and the supply of electric power from the battery 328 is stopped, the control ECU 100 can hold the reference value of the vehicle attitude angle θᵥ and the reference value of the road surface angle θᵣ.

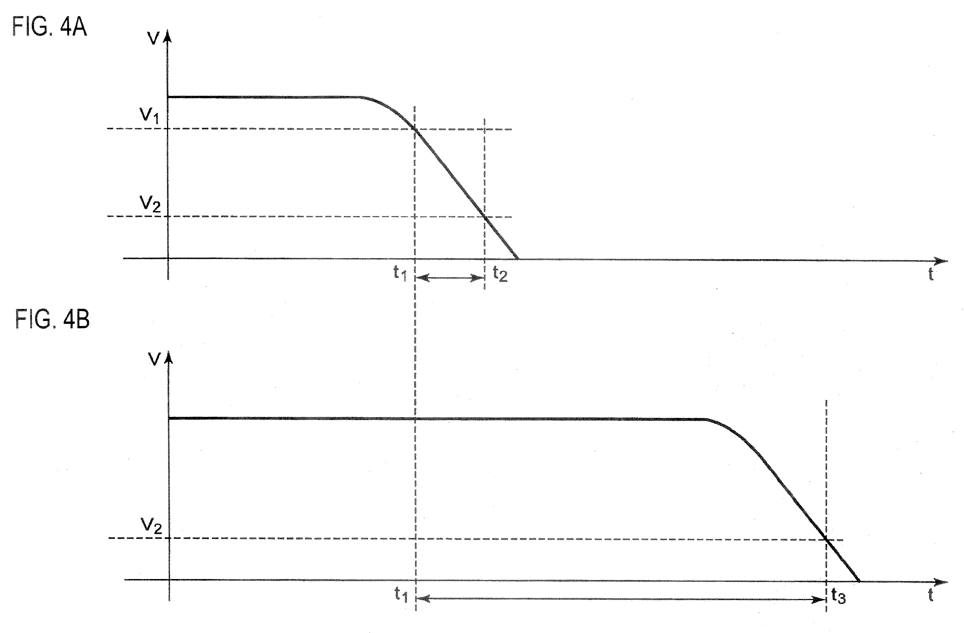

Here, a method of supplying power that is necessary for an operation of the reference value writing section 1204 will be described. Fig. 4A is a time chart illustrating a change of supplied electric power, with time, in the control ECU of a comparative example. Fig. 4B is a time chart illustrating a change of supplied electric power, with time, in the control ECU according to the first embodiment. In Fig. 4A and Fig. 4B, the vertical axis indicates an electric source voltage (V) and the horizontal axis indicates time (t).

As described above, after the off state of the ignition switch 326 is detected, the reference value writing section 1204 writes the road surface angle reference value and the vehicle attitude angle reference value into the storage 108. Meanwhile, if this goes on the ignition switch 326 is turned off, the on state of the switch 1102 maintained by the high-level signal output from the IG monitor 114 is released. Therefore, if this goes on, the supply of electric power from the battery 328 to the controller 120 is stopped and the writing operation of the reference value writing section 1204 is also stopped. Accordingly, it is necessary to ensure electric power required for the writing operation of the reference value writing section 1204 from the time at which the off state of the ignition switch 326 is detected to a time at which the writing operation of the reference value writing section 1204 is completed.

One might attempt to provide this electric power by using (i) electric power supplied from the battery 328 from the time at which the ignition switch 326 is turned off until the switch 1102 is turned off and the supply of electric power from the battery 328 is then stopped and (ii) electric power supplied from an electric storage element (not shown) such as a capacitor provided around the battery 328 and/or in the control ECU 100. It is assumed that in the comparative example, the electric power for the operation of the reference value writing section 1204 is secured in this manner. In this case, the electric power supplied in the control ECU of the comparative example changes as shown in Fig. 4A.

That is, it is assumed that the off state of the ignition switch 326 is detected at time t1. The source voltage gradually decreases from a voltage V1 which is a voltage at the time when the off state of the ignition switch 326 is detected. Then, the source voltage reaches a lower limit drive voltage V2 of the reference value writing section 1204 at time t2. Therefore, the reference value writing section 1204 needs to complete the writing of the road surface angle reference value and the vehicle attitude angle reference value within a period from the time t1 to the time t2. A reduction rate (a gradient of a straight line) of the source voltage from the time t1, that is, a length of the period from the time t1 to the time t2 depends on a system load of the CPU 104 and the like and a time constant of the electric storage element and the like.

Therefore, there is a possibility that the control ECU of the comparative example cannot provide electric power necessary for the reference value writing section 1204 up to the end of the writing operation of the reference value writing section 1204. It is noted that the control ECU of the comparative example is configured to operate with being supplied with electric power from an ignition power source. Therefore, the electric source voltage on the vertical axis of Fig. 4A is equivalent to an ignition voltage. Also, if the ignition voltage falls below a predetermine threshold voltage, for example, if a value of the ignition voltage becomes V1, the control ECU 100 detects the off state of the ignition switch 326.

Then, the control ECU 100 according to this embodiment secures the power necessary for the writing operation of the reference value writing section 1204 in the following manner. That is, in the control ECU100 of this embodiment, the power supply maintaining section 1208 of the controller 120 maintains the supply of electric power from the battery 328 while the ignition switch 326 is in the off state. More specifically, if the ignition switch 326 is turned on and the high-level signal is transmitted from the IG monitor 114, the power supply maintaining section 1208 transmits the high-level signal to the OR circuit 1104 via the transmitter 122. Then, even if the ignition switch 326 is turned off, the power supply maintaining section 1208 continues to transmit the high-level signal. Thereby, the electric power supplied in the control ECU 100 according to this embodiment changes as shown in Fig. 4B.

That is, since the power supply maintaining section 1208 maintains the on state of the switch 1102 even after the ignition switch 326 is turned off, the length from the time t1 at which the off state of the ignition switch 326 is detected to time t3 at which the electric source voltage reaches the lower limit drive voltage V2 of the reference value writing section 1204 can be adjusted in accordance with a time period required for the reference value writing process. Therefore, the reference value writing section 1204 can more reliably write, into the storage 108, the road surface angle reference value and the vehicle attitude angle reference value. It is noted that the power supply maintaining section 1208 may not transmit the high-level signal when the ignition switch 326 is turned on but may transmit the high-level signal when the ignition switch 326 is turned off and the power supply maintaining section receives the low-level signal from the IG monitor 114. Even in this case, after the ignition switch 326 is turned off, it is possible to maintain the on state of the switch 1102. From the viewpoint of the stabilization of the supply of electric power to the controller 120, it is preferable that the power supply maintaining section 1208 transmits the high-level signal at the time when the ignition switch 326 is turned on.

If it is completed to write the road surface angle reference value and the vehicle attitude angle reference value, which are held in the RAM 124, into the storage 108, the reference value writing section 1204 transmits a writing end signal indicating that the writing of the reference value is completed to the stop instruction signal generator 1210. Upon receipt of the writing end signal, the stop instruction signal generator 1210 generates a stop instruction signal to instruct to stop the supply of electric power from the battery 328 and transmits the generated stop instruction signal to the power supply maintaining section 1208. Upon receipt of the stop instruction signal, the power supply maintaining section 1208 switches the signal transmitted to the OR circuit 1104 from the high level to the low level. Thereby, since the low-level signal is transmitted from the IG monitor 114 and the CPU 104 to the OR circuit 1104, the switch 1102 shifts to the off state. As a result, the supply of electric power to the controller 120 from the battery 328 is stopped. Since the power supply maintaining section 1208 receives the stop instruction signal and stops the supply of electric power from the battery 328, it is possible to suppress an increase in power consumption.

It is noted that immediately after the ignition switch 326 is turned off, in general, it is likely take place that passengers get out of the vehicle 300 and the attitude of the vehicle 300 is likely to change. Therefore, even if the off state of the ignition switch 326 is detected, the reference value writing section 1204 may await without writing the reference values in the storage 108 until the attitude of the vehicle 300 becomes stable. Even after the ignition switch 326 is turned off, the adjustment instruction section 1202 repeats the calculation of the vehicle attitude angle. Then, the reference value writing section 1204 writes the reference values in the storage 108 after the attitude of the vehicle 300 becomes stable. Thereby, it is possible to enhance the accuracy of the automatic leveling control. Also, it is possible that a time that it takes until the attitude of the vehicle 300 becomes stable is appropriately set based on designer's experiments and/or designer's simulations. Therefore, a timing at which the reference value writing section 1204 starts to write the reference values may be appropriately set by a designer.

### (Control when the ignition switch shifts to the on state)

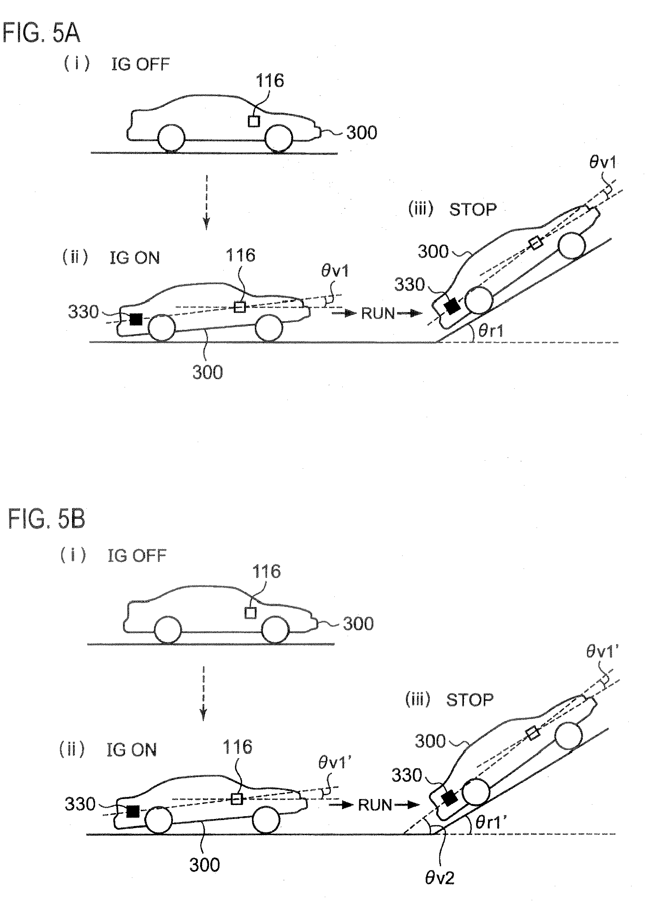

Fig. 5A is a view illustrating the auto-leveling control in a case where it is not detected within a predetermined time after the ignition is turned on that the vehicle starts moving. Fig. 5B is a view illustrating the auto-leveling control in a case where it is detected within the predetermined time after the ignition is turned on that the vehicle starts moving.

In the state where the ignition switch 326 is turned off, the road surface angle θᵣ is rarely changed by the movement of the vehicle 300. Therefore, the change of the total angle θ from a time at which the ignition switch 326 is turned on to a time at which the ignition switch 326 is turned off can be estimated as the change of the vehicle attitude angle θᵥ. Then, in the case where the ignition switch 326 shifts to the on state, the adjustment instruction section 1202 obtains, as a first control after starting, the current vehicle attitude angle θᵥ by subtracting the road surface angle reference value, which is read out from the storage 108, from the total angle θ which is obtained from the current output value of the inclination sensor 116. Subsequently, the thus obtained vehicle attitude angle θᵥ is stored in the RAM 124 as the vehicle attitude angle reference value. Also, the adjustment instruction section 1202 generates the optical axis adjustment signal using the thus obtained vehicle attitude angle θᵥ. Thereby, it is possible to incorporate, into the vehicle attitude angle reference value, the change of the vehicle attitude angle θᵥ during a period in which the ignition switch 326 is in the off state. Also, it is possible to adjust the optical axis angle θ_{O} to an appropriate position. Therefore, it is possible to enhance the accuracy of the auto-leveling control.

Here, after the ignition switch 326 is turned on, the control ECU 100 usually requires about 1 second until the completion of its starting, that is, until the control ECU 100 becomes a state in which it can execute the first control after its starting. Therefore, in a situation where the vehicle 300 is actually used, there is a possibility that the vehicle 300 starts moving before the first control after starting is executed. In this case, there is a possibility that the first control after starting is executed when the vehicle 300 is stopped next, and an error might be thereby generated in the vehicle attitude angle reference value.

For example, as an example of a case where the vehicle 300 does not start moving until the starting of the control ECU 100 is completed, it is assumed that the vehicle 300 is operated as shown in Fig. 5A. That is, in the state where the ignition switch 326 is turned off as shown in (i) of Fig. 5A, a luggage 330 is loaded on the vehicle 300 as shown in (ii) of Fig. 5A. The vehicle attitude angle θᵥ is changed by an angle θᵥ₁ as the luggage 330 is loaded thereon. Thereafter, the ignition switch 326 is turned on, and the control ECU 100 is started upon receipt of power from the battery 328.

When the starting of the control ECU 100 is completed, the adjustment instruction section 1202 executes the first control after starting as described above. That is, the adjustment instruction section 1202 calculates the vehicle attitude angle θᵥ based on the output value of the inclination sensor 116 in this state and the road surface angle reference value, which is read out from the storage 108. Then, the obtained vehicle attitude angle θᵥ is recorded in the RAM 124 as a new vehicle attitude angle reference value. Thereby, it is possible to reflect the change (angle θᵥ₁) of the vehicle attitude angle θᵥ resulting from the loading of the luggage 330 to the vehicle attitude angle reference value. Also, the adjustment instruction section 1202 adjusts the optical axis angle θ_{O} by using the vehicle attitude angle reference value to which the angle θᵥ₁ is reflected.

It is assumed that thereafter, the vehicle 300 starts moving, and stops on a slope of which the road surface angle θᵣ is inclined by an angle θᵣ₁ as shown in (iii) of Fig. 5A. At the vehicle stopping moment, the adjustment instruction section 1202 obtains, by a normal control, the road surface angle θᵣ by subtracting the vehicle attitude angle reference value stored in the RAM 124 from the current total angle θ. Then, the obtained road surface angle θᵣ is stored in RAM 124 as a new road surface angle reference value. Thereby, it is possible to reflect the change (angle θᵣ₁) of the road surface angle θᵣ to the road surface angle reference value.

Meanwhile, as an example of a case where the vehicle 300 starts moving before the starting of the control ECU 100 is completed, it is assumed that the vehicle 300 is operated as shown in Fig. 5B. That is, in the state where the ignition switch 326 is turned off as shown in (i) of Fig. 5B, the luggage 330 is loaded on the vehicle 300 as shown in (ii) of Fig. 5B. Thereby, the vehicle attitude angle θᵥ is changed by an angle θ_{v1'}. It is assumed that thereafter, the ignition switch 326 is turned on and the vehicle 300 starts moving before the starting of the control ECU 100 is completed. In this case, the adjustment instruction section 1202 cannot execute the first control after starting, before the vehicle starts moving.

It is further assumed that thereafter, the vehicle 300 stops on a slope of which the road surface angle θᵣ is inclined by an angle θ_{r1'} as shown in (iii) of Fig. 5B. Thereafter, the adjustment instruction section 1202 executes the first control after starting. That is, the adjustment instruction section 1202 calculates the vehicle attitude angle θᵥ based on the current output value of the inclination sensor 116 and the road surface angle reference value read out from the storage 108. Then, the obtained vehicle attitude angle θᵥ is recorded in the RAM 124 as a new vehicle attitude angle reference value.

The road surface angle reference value, which is used at this time, is the reference value which is recorded in the storage 108 when the ignition switch 326 is turned off. That is, the road surface angle reference value, which is used at this time, is a reference value corresponding to the road surface angle θᵣ in the state of (i) and (ii) of Fig. 5B. Therefore, if the first control after starting is executed after the vehicle 300 starts moving, even through the road surface angle θᵣ is changed by the angle θ_{r1'}, the vehicle attitude angle θᵥ is calculated using the road surface angle reference value to which this change of the road surface angle is not reflected. Accordingly, not only the changed angle θ_{r1'} of the road surface angle θᵣ which results from the movement of the vehicle 300 but also the changed angle θ_{v1'} of the vehicle attitude angle θᵥ which results from the loading of the luggage 330 are incorporated into the vehicle attitude angle reference value as the change (angle θᵥ₂) of the vehicle attitude angle θᵥ. As a result, an error may occur in the vehicle attitude angle reference value by the angle θ_{r1'}.

Meanwhile, even if the vehicle 300 starts moving before the completion of the starting of the control ECU 100 and the first control after starting is executed during the vehicle travel, the change of the road surface angle θᵣ which results from the movement of the vehicle 300 is incorporated into the vehicle attitude angle reference value.

Therefore, if it is not detected within the predetermined time from the shift that the vehicle 300 starts moving, the control ECU 100 generates the optical axis adjustment signal using the total angle θ which obtained from the current output value of the inclination sensor 116 and the vehicle attitude angle θᵥ obtained from the road surface angle reference value read out from the storage 108. Then, the obtained vehicle attitude angle θᵥ is held in the RAM 124 as the vehicle attitude angle reference value.

Meanwhile, if the start detector 1206 detects within the predetermined time after the ignition switch 326 shifts to the on state that the vehicle 300 starts moving, the adjustment instruction section 1202 holds the road surface angle θᵣ, which is obtained based on the total angle θ obtained from the output value of the inclination sensor 116 and the vehicle attitude angle reference value read out from the storage 108, in the RAM 124 as the road surface angle reference value. Then, the optical axis adjustment control, which is to be executed thereafter with respect to the change of the total angle θ during the vehicle stop, is executed using the vehicle attitude angle θᵥ obtained from this road surface angle reference value and the total angle θ.

It is noted that the road surface angle reference value used there is obtained based on the total angle θ and the vehicle attitude angle reference value read out from the storage 108. Therefore, the vehicle attitude angle θᵥ obtained from the road surface angle reference value and the total angle θ is equal to the vehicle attitude angle reference value read out from the storage 108. Accordingly, in the case where the vehicle 300 starts moving within the predetermined time after the ignition is turned on, the optical axis adjustment control during the vehicle stop, which is to be executed thereafter, may be executed using the vehicle attitude angle reference value read out from the storage 108.

Thereby, it can be prevented that the change of the road surface angle θᵣ which results from the movement of the vehicle 300 is incorporated into the vehicle attitude angle reference value. Therefore, it is possible to enhance the accuracy of the automatic leveling control. It is noted that the above described control cannot incorporate the change (θ_{v1'}) of the vehicle attitude angle θᵥ, which occurs during a period in which the ignition switch 326 is in the off state, into the vehicle attitude angle reference value. However, in the situation where the vehicle 300 is actually used, an amount of the change of the road surface angle θᵣ is much greater than an amount of the change of the vehicle attitude angle θᵥ. Therefore, a reduction in the accuracy of the auto-leveling control in the case where the change of the road surface angle θᵣ is incorporated into the vehicle attitude angle reference value is much greater than a reduction in the accuracy of the auto-leveling control in the case where the change of the vehicle attitude angle θᵥ, which occurs during the period in which the ignition switch 326 is in the off state is not incorporated into the vehicle attitude angle reference value. Thus, by avoiding that the change of the road surface angle θᵣ is incorporated into the vehicle attitude angle reference value, it is possible to enhance the accuracy of the auto-leveling control.

The term "predetermined time" is a time from when the ignition switch 326 is turned on to when the starting of the control ECU 100 is completed. It is noted that the "predetermined time" may be appropriately set based on designer's experiments and/or designer's simulations. Also, the start detector 1206 can determine as to whether or not the vehicle 300 starts moving, based on the signal transmitted from the vehicle speed sensor 312. The control ECU 100 (the start detector 1206) can detect if the vehicle 300 starts moving, based on the signal of the vehicle speed sensor 312 from immediately after the ignition switch 326 is turned on.

In this embodiment, in the case where the start detector 1206 detects within the predetermined time after the ignition switch 326 shifts to the off state that the vehicle 300 starts moving, the road surface angle θᵣ can be calculated at the vehicle stopping moment from the output value of the inclination sensor 116 at the vehicle stopping moment and the vehicle attitude angle reference value read out from the storage 108. Thus, it is possible to calculate the road angle reference value more accurately. In this case, it is preferable that the adjustment instruction section 1202 maintains the optical axis position from when the vehicle starts moving to when the vehicle stops thereafter or adjusts the optical axis position to a predetermined reference position. Thus, it is possible to avoid a risk of causing glare to a driver of another vehicle or significantly reducing a risk of the visibility of a driver of the own vehicle.

For example, the "predetermined reference position" may be an initially setting position or a lower limit position of a movement range of the optical axis O. In this case, it is possible to reduce the risk of causing the glare to the driver of the other vehicle. Further, for example, the "predetermined reference position" may be an upper limit position of the movement range of the optical axis O. In this case, it is possible to ensure the visibility of the driver of the own vehicle.

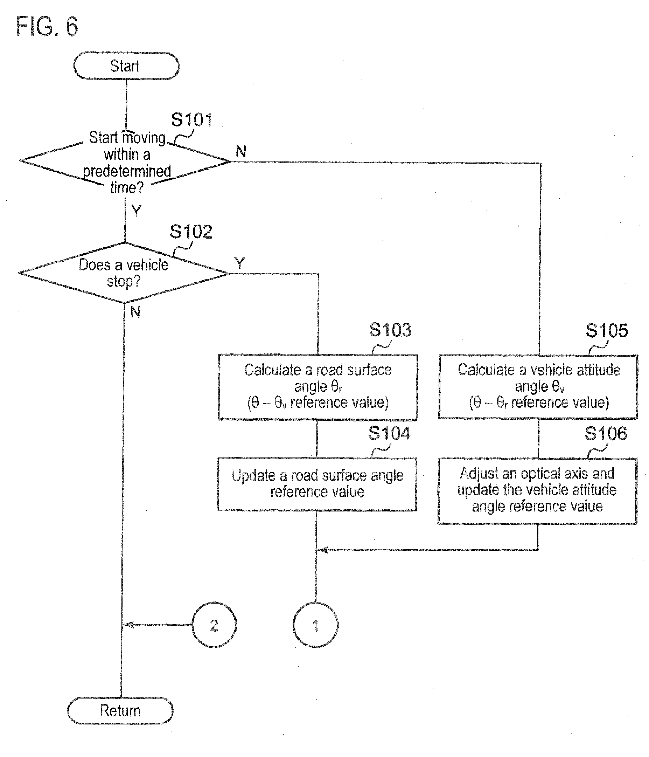

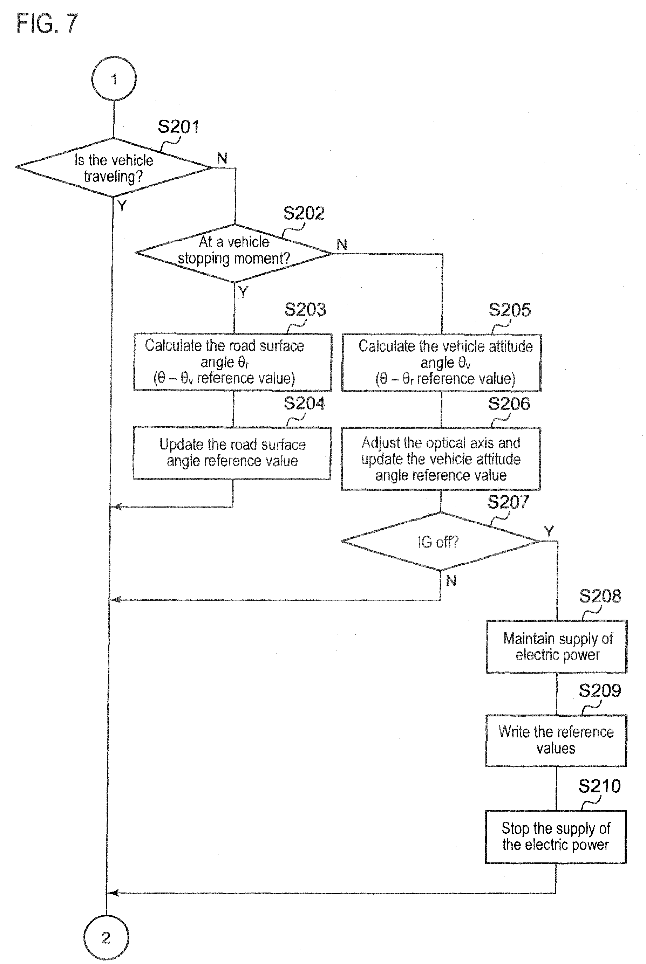

Figs. 6 and 7 are flow charts illustrating the auto-leveling control executed by the control ECU according to the first embodiment. If the ignition switch 326 is turned on and electric power is supplied thereto from the battery 328, this flow starts and is repeatedly executed at a predetermined timing.

As shown in Fig. 6, the control ECU 100 at first determines as to whether or not the vehicle 300 starts moving within the predetermined time after the ignition switch 326 shifts to the on state (S101). If the vehicle 300 starts moving within the predetermined time (Yes at S101), the control ECU 100 determines as to whether or not the vehicle 300 stops (S102). If the vehicle 300 does not stop (No at S102), the control ECU 100 ends this routine. If the vehicle 300 stops (Yes at S102), the control ECU 100 obtains the road surface angle θᵣ by subtracting from the current total angle θ the vehicle attitude angle reference value, which is read from the storage 108 (S103). Then, the control ECU 100 updates a new road surface angle reference value with the obtained road surface angle θᵣ and stores the new road surface angle reference value in the RAM 124 (S104). The control ECU 100 proceeds to a normal control shown in Fig. 7 in a state where the optical axis angle θ_{O} of the lamp unit 10 is maintained, for example, at the initial setting position.

If the vehicle 300 does not start moving within the predetermined time (No in S101), the control ECU 100 calculates the vehicle attitude angle θᵥ by subtracting from the current total angle θ the road surface angle reference value read from the storage 108 (S105). Then, the control ECU 100 adjusts the optical axis angle θ_{O} using the obtained vehicle attitude angle θᵥ, and updates and stores the vehicle attitude angle reference value in the RAM 124 (S106). Also, the control ECU 100 stores the road surface angle reference value read out from the storage 108 in the RAM 124

Subsequently, the normal control is executed as shown in FIG 7. That is, the control ECU 100 determines as to whether or not the vehicle is traveling (during the vehicle travel) (S201). If the vehicle is traveling (Yes at S201), the control ECU 100 ends the routine. If the vehicle is not traveling (No at S201), the control ECU 100 determines as to whether or not it is the vehicle stopping moment (S202). If it is the vehicle stopping moment (Yes at S202), the control ECU 100 calculates the road surface angle θᵣ by subtracting form the current total angle θ the vehicle attitude angle reference value which is held in the RAM 124 (S203). Then, the control ECU 100 updates the road surface angle reference value with the calculated road surface angle θᵣ (S204) and ends the routine.

If it is not the vehicle stopping moment (No at S202), this case means "during the vehicle stop." Therefore, the control ECU 100 calculates the vehicle attitude angle θᵥ by subtracting from the current total angle θ the road angle reference value held in the RAM124 (S205). Then, the control ECU 100 adjusts the optical axis angle θ_{O} using the obtained vehicle attitude angle θᵥ, updates the vehicle attitude angle reference value with the obtained vehicle attitude angle θᵥ, and stores the vehicle attitude angle reference value in the RAM 124 (S206).

Subsequently, the control ECU 100 determines as to whether or not the ignition switch 326 shifts to the off state (S207). If the ignition switch 326 does not shift to the off state (No at S207), the control ECU 100 ends the routine. If the ignition switch 326 shifts to the off state (Yes at S207), the control ECU 100 maintains the supply of electric power from the battery 328 (S208). Then, the control ECU 100 writes into the storage 108 the road surface angle reference value and the vehicle attitude angle reference value, which are held in the RAM 124 (S209). Thereafter, the control ECU 100 stops the supply of electric power from the battery 328 (S209) and ends the routine.

As described above, in the control ECU 100 serving as the control apparatus for the vehicle lamp according to this embodiment, the controller 120 holds in the volatile manner the vehicle attitude angle reference value and the road surface angle reference value. With respect to the change of the total angle θ during the vehicle stop, the controller 120 calculates the vehicle attitude angle θᵥ based on the total angle θ and the held road surface angle reference value, generates the optical axis adjustment signal using the vehicle attitude angle θᵥ, and holds the obtained vehicle attitude angle θᵥ as a new vehicle attitude angle reference value. Also, with respect to the change of the total angle θ during vehicle travel, the controller 120 avoids outputting the optical axis adjustment signal or outputs the optical axis maintaining signal, and holds the road surface angle θᵣ, which is obtained based on the total angle θ and the held vehicle attitude angle reference value, as a new road surface angle reference value.

Also, if the ignition switch 326, which is the switch of the battery 328, shifts to the off state, the controller 120 writes the road surface angle reference value and the vehicle attitude angle reference value, which are held, in the storage 108. Thereafter, in a case where the ignition switch 326 shifts to the on state, if it is not detected within the predetermined time after the shift that the vehicle starts moving, the controller 120 generates the optical axis adjustment signal using the vehicle attitude angle θᵥ, which is obtained based on the total angle θ and the road surface angle reference value read out from the storage 108, and holds the obtained vehicle attitude angle θᵥ in the RAM 124 as a vehicle attitude angle reference angle. Meanwhile, if it is detected within the predetermined time from the shift that the vehicle starts moving, the controller 120 holds the road surface angle θᵣ, which is obtained from the total angle θ and the vehicle attitude angle reference value read out form the storage 108, in the RAM 124 as the road surface angle reference value, and generates the optical axis adjustment signal using the vehicle attitude angle θᵥ, which is obtained from this road surface angle reference value and the total angle θ, or the vehicle attitude angle reference value read out from the storage 108.

In this way, it is possible to prevent the change of the road surface angle θᵣ, which results from the movement of the vehicle 300, from being incorporated into the vehicle attitude angle reference value before the starting of the control ECU 100 is completed. Thus, it is possible to enhance the accuracy of the auto-leveling control using the inclination sensor 116.

It should be noted that the invention is not limited to the embodiments described above. Modifications such as various design changes may be made in the invention based on knowledge of those skilled in the art. Embodiments obtained by such modifications are also included within the scope of the invention. New embodiments obtained by combining the modifications and/or the embodiments described above have effects of the respective combined modifications and/or the respective combined embodiments.

In the embodiments described above, although the acceleration sensor is used as the inclination sensor 116, the inclination sensor 116 may be a gyro sensor (angular velocity sensor, angular acceleration sensor), or a geomagnetic sensor.

## Claims

1. A control apparatus (100) for a vehicle lamp (210), the control apparatus (100) comprising:
a receiver (118) that receives an output value of an inclination sensor (116) that can derive a total angle (θ) which is an inclination angle of a vehicle (300) with respect to a horizontal plane, the inclination angle of the vehicle (300) including a road surface angle (θᵣ) which is an inclination angle of a road surface with respect to the horizontal plane and a vehicle attitude angle (θᵥ) which is an inclination angle of the vehicle (300) with respect to the road surface;
a controller (120) that controls an optical axis (O) of the vehicle lamp (210); and
a storage (108) that stores in a non-volatile manner a road surface angle reference value and a vehicle attitude angle reference value, wherein
the controller (120)
holds in a volatile manner the road surface angle reference value and the vehicle attitude angle reference value,
with respect to a change of the total angle (θ) during vehicle stop, generates an optical axis adjustment signal using the vehicle attitude angle (θᵥ), which is obtained based on the total angle (θ) and the held road surface angle reference value, and holds the obtained vehicle attitude angle (θᵥ) as a new vehicle attitude angle reference value;
with respect to a change of the total angle during vehicle travel, avoids outputting the optical axis adjustment signal or outputs an optical axis maintaining signal, and holds the road surface angle (θᵣ), which is obtained based on the total angle (θ) and the held vehicle attitude angle reference value, as a new road surface angle reference value,
if a switch (326) of a power source (328) for the control apparatus (100) shifts to an off state, writes into the storage (108) the road surface angle reference value and the vehicle attitude reference value, which are held, and
where the switch (326) shifts to an on state,
if it is not detected within a predetermined time after the shift that the vehicle (300) starts moving, generates the optical axis adjustment signal using the vehicle attitude angle (θᵥ), which is obtained based on the total angle (θ) and the road surface angle reference value read out from the storage (108), and holds the obtained vehicle attitude angle (θᵥ) as the vehicle attitude angle reference value, and
if it is detected within the predetermined time after the shift that the vehicle (300) starts moving, holds the road surface angle (θᵣ), which is obtained based on the total angle (θ) and the vehicle attitude angle reference value read out from the storage (108), as the road surface angle reference value, and generates the optical axis adjustment signal using
the vehicle attitude angle (θᵥ), which is obtained based on the read-out road surface angle reference value and the total angle (θ), or
the read out vehicle attitude angle reference value.

2. The control apparatus (100) according to claim 1, wherein
if it is detected within the predetermined time after the shift that the vehicle (300) starts moving, the controller (120)
maintains the optical axis (O) at a time when the vehicle (300) starts moving from when the vehicle (300) starts moving to when the vehicle (300) stops, or
adjusts a position of the optical axis (O) to a predetermined reference position.

3. The control apparatus (100) according to any one of claims 1 to 2, further comprising:
a power supply maintaining section (1208) that maintains supply of electric power from the power source (328) in a state where the switch (326) is in the off state.

4. The control apparatus (100) according to claim 3, wherein
upon completion of writing into the storage (108) the road surface angle reference value and the vehicle attitude angle reference value, which are held, the controller (120) generates a stop instruction signal to instruct to stop the supply of the electric power from the power source (328), and
upon receipt of the stop instruction signal, the power supply maintaining section (1208) stops the supply of the electric power from the power source (328).
